# EUROPÄISCHE PATENTSCHRIFT

(11) **EP 3 705 332 B1**
(45) Veröffentlichungstag und Bekanntmachung des Hinweises auf die Patenterteilung: **10.05.2023**
(21) Anmeldenummer: 19161317.3
(22) Anmeldetag: 07.03.2019
(51) Int. Cl.: B60K 35/00, B60K 37/00, B60K 37/04, B60R 11/02, B60R 11/00

(54) **ANZEIGESYSTEM FÜR EIN FAHRZEUG SOWIE MOBILE ANZEIGEEINRICHTUNG UND ANZEIGESCHNITTSTELLE FÜR EIN ANZEIGESYSTEM**
DISPLAY SYSTEM FOR A VEHICLE AND MOBILE DISPLAY DEVICE AND DISPLAY INTERFACE FOR A DISPLAY SYSTEM
SYSTÈME D'AFFICHAGE POUR UN VÉHICULE AINSI QUE DISPOSITIF D'AFFICHAGE MOBILE ET INTERFACE D'AFFICHAGE POUR UN SYSTÈME D'AFFICHAGE

(43) Veröffentlichungstag der Anmeldung: 09.09.2020
(73) Patentinhaber: Lisa Dräxlmaier GmbH, 84137 Vilsbiburg (DE)
(72) Erfinder: Castillo, Juan, 84034 Landshut (DE); Schmittat, Lutz, 84137 Vilsbiburg (DE)

(56) Entgegenhaltungen:
- DE-A1- 19 942 295
- DE-A1-102009 007 767
- DE-A1-102010 047 521
- FR-A1- 2 953 785

## Beschreibung

### Technisches Gebiet

Die vorliegende Erfindung betrifft ein Anzeigesystem für ein Fahrzeug sowie eine mobile Anzeigeeinrichtung und eine Anzeigeschnittstelle für ein derartiges Anzeigesystem.

### Stand der Technik

Auf Fahrzeugdisplays werden, neben klassischen fahrzeugspezifischen Daten, zunehmend auch immer mehr Inhalte zum Beispiel von Apps von mobilen Endgeräten in Form von Smartphones und dergleichen dargestellt. Üblicherweise sind Fahrzeugdisplays ortsfest in den Fahrzeugen verbaut, wodurch sich eine je nach dargestelltem Inhaltstypus eine suboptimale Ergonomie für den Insassen ergeben kann, zum Beispiel hinsichtlich des Blickwinkels oder der Erreichbarkeit des betreffenden Displays. Letzteres ist insbesondere nachteilig bei Touchscreens.

Des Weiteren ist die Hardware von Fahrzeugdisplays insbesondere im Vergleich der dazu sehr kurzen Entwicklungszyklen der Unterhaltungsindustrie relativ schnell veraltet und wird den Anforderungen der betreffenden Software und der darzustellenden bzw. wiederzugebenden Inhalte schnell nicht mehr gerecht. Die Auflösung von Fahrzeugdisplays kann zum Modellstart des betreffenden Fahrzeugs noch modern oder zumindest adäquat erscheinen. Wenige Zeit nach dem Modellstart kann die Auflösung schon zu gering und damit veraltet wirken, beispielsweise im Vergleich mit der währenddessen erfolgten Weiterentwicklung von Smartphone-Displays oder Computer-Displays, nur um mal ein Beispiel zu nennen.

Systeme, die ein fahrzeugfremdes Display in ein Fahrzeug integrieren können, bringen wiederum andere Nachteile mit sich, wie beispielsweise die Verdeckung anderer Komponenten innerhalb des Fahrzeugs, zum Beispiel von Luftausströmern und dergleichen. Zudem bringen fahrzeugfremde Displays, die im Fahrzeuginnenraum integriert bzw. angebracht werden, oftmals eine relativ geringe Crashsicherheit mit sich.

Die Dokumente DE 10 2010 047 521 A1, FR 2 953 785 und DE 199 42 295 beschreiben ein Anzeigensystem gemäß dem Oberbegriff des Patentanspruchs 1.

### Beschreibung der Erfindung

Es ist daher die Aufgabe der vorliegenden Erfindung, eine Lösung bereitzustellen, mittels welcher verschiedenste Inhalte im Fahrzeuginnenraum sowohl besonders ergonomisch als auch besonders crashsicher bereitgestellt werden können.

Diese Aufgabe wird durch ein Anzeigesystem für ein Fahrzeug sowie durch eine mobile Anzeigeeinrichtung und durch eine Anzeigeschnittstelle für ein derartiges Anzeigesystem mit den Merkmalen der unabhängigen Patentansprüche gelöst. Weitere mögliche Ausgestaltungen der Erfindung sind in den abhängigen Ansprüchen angegeben.

Das erfindungsgemäße Anzeigesystem für ein Fahrzeug umfasst eine mobile Anzeigeeinrichtung mit einer aus einer eingeklappten Stellung ausklappbaren Klappe zum Fixieren der Anzeigeeinrichtung in einem Fahrzeuginnenraum des Fahrzeugs. Des Weiteren umfasst das erfindungsgemäße Anzeigesystem eine im Fahrzeuginnenraum integrierbare Anzeigeschnittstelle zum Aufnehmen und Fixieren der mobilen Anzeigeeinrichtung in einer definierten Gebrauchsstellung, wobei die Anzeigeschnittstelle einen als Vertiefung ausgebildeten Aufnahmebereich umfasst, in welchen die ausgeklappte Klappe in einer Einsteckrichtung einführbar und mittels einer im Aufnahmebereich angeordneten Fixiereinrichtung in einer Endlage fixierbar ist, in welcher die mobile Anzeigeeinrichtung in der Gebrauchsstellung angeordnet ist.

Die ausklappbare Klappe kann beispielsweise an einer Rückseite der mobilen Anzeigeeinrichtung angeordnet sein, wobei ein Anzeigebereich, also das eigentliche Display der Anzeigeeinrichtung, an einer Vorderseite der mobilen Anzeigeeinrichtung angeordnet sein kann. Die einklappbare und ausklappbare Klappe kann beispielsweise mittig an der Rückseite angeordnet sein. Andere Positionierungen sind aber ebenfalls möglich. Die Klappe kann beispielsweise auch als Standfuß ausgebildet sein, sodass die mobile Anzeigeeinrichtung bei ausgeklappter Klappe beispielswiese auf einem Tisch oder einem anderen Untergrund stabil unter Zuhilfenahme der ausgeklappten Klappe abgestellt werden kann. Bei der mobilen Anzeigeeinrichtung kann es sich beispielsweise um einen Tabletcomputer, im einfachsten Fall aber auch einfach nur um ein Display oder auch beispielsweise um ein Smartphone handeln. Grundsätzlich kann es sich bei der mobilen Anzeigeeinrichtung um beliebige tragbare Anzeigeeinrichtungen handeln, an welchen eine derartige Klappe angebracht sein kann.

Gemäß einem weiteren unabhängigen Aspekt der Erfindung ist es auch möglich, dass die Klappe in einer Art Rahmenstruktur oder Ähnlichem angeordnet ist, wobei die Rahmenstruktur als Zubehörteil, Nachkaufteil oder Anbauteil zum Fixieren an der mobilen Anzeigeeinrichtung ausgebildet sein kann. In dem Fall ist besagte Rahmenstruktur so ausgebildet, dass diese zuverlässig und fest an der Anzeigeeinrichtung, beispielsweise an ihrer Rückseite, befestigt und verriegelt werden kann. So könnte beispielsweise ein Hersteller von Tabletcomputern die an sich herkömmlichen Komponenten, wie beispielsweise Prozessoren, Displays und dergleichen in gewohnter Weise montieren. Besagte Rahmenstruktur könnte von einem Zulieferer hergestellt und in einem Montageschritt im oder am Gehäuse des Tabletcomputers montiert werden. In dem Fall könnte die Rahmenstruktur mit der Klappe also als integraler Bestandteil des Tabletcomputers ausgebildet sein. Dies könnte bei beliebigen anderen mobilen Anzeigeeinrichtungen ebenfalls so erfolgen.

Besagte Rahmenstruktur kann beispielsweise auch Teil einer Art abnehmbare Hülle sein, wie sie an sich für Tabletcomputer oder Smartphones bekannt sind. In dem Fall kann die mobile Anzeigeeinrichtung einfach in diese Hülle eingesetzt und darin verriegelt werden, wonach die einklappbare und ausklappbare Klappe zum Fixieren der Anzeigeeinrichtung im Fahrzeuginnenraum des betreffenden Fahrzeugs verwendet werden kann. Die Hülle kann zudem Schnittstellen für ein paar oder alle Anschlüsse der Anzeigeeinrichtung aufweisen, sodass bei angebrachter Hülle und in den Aufnahmebereich der fahrzeugseitigen Schnittstelle eingesteckter Klappe z.B. Tonsignale, Videosignale, Steuersignale und dergleichen zwischen Fahrzeug und Anzeigeeinrichtung übertragen werden können.

Die mobile Anzeigeeinrichtung dient bei dem erfindungsgemäßen Anzeigesystem also als crashsicheres und abnehmbares Display. Die im Fahrzeuginnenraum integrierbare Anzeigeschnittstelle kann beispielsweise dazu ausgelegt sein, im Bereich einer Instrumententafel oder im Bereich einer Mittelkonsole integriert zu werden. Auch ist es möglich, dass die integrierbare Anzeigeschnittstelle dazu ausgelegt ist, im Fondbereich, beispielsweise an einer Rückseite eines Vordersitzes, am Dachhimmel oder dergleichen integriert zu werden. Genauso ist es beispielsweise auch möglich, die Anzeigeschnittstelle an Fahrzeugtüren oder auch beispielsweise im Kofferraum zu integrieren. Grundsätzlich kann die integrierbare Anzeigeschnittstelle so ausgestaltet sein, dass sie an beliebigen Stellen im Fahrzeuginnenraum integriert werden kann. Die integrierbare Anzeigeschnittstelle kann beispielsweise Bestandteil eines fest verbauten Interieurteils des betreffenden Fahrzeugs sein, beispielsweise der Instrumententafel, der Mittelkonsole oder dergleichen. Die Anzeigeschnittstelle kann z.B. als vormontierte Baugruppe von einem Automobilzulieferer hergestellt und einem Automobilhersteller zur Verfügung gestellt werden, welcher die Anzeigeschnittstelle in seine Fahrzeuge einbaut. Bei der vormonierten Baugruppe kann es sich beispielsweise um einen Teil oder einer Mittelkonsole handeln, welche die Anzeigeschnitte aufweist.

Durch den als Vertiefung ausgebildeten Aufnahmebereich der Anzeigeschnittstelle kann die ausklappbare Klappe in ihrer ausgeklappten Stellung zuverlässig an bzw. in der Anzeigeschnittstelle aufgenommen werden. Dafür muss die ausgeklappte Klappe einfach nur in der besagten Einsteckrichtung in den Aufnahmebereich der Anzeigeschnittstelle eingeführt werden. Dadurch, dass die Anzeigeschnittstelle besagte Fixiereinrichtung innerhalb des Aufnahmebereichs aufweist, kann die in den Aufnahmebereich eingesteckte bzw. eingeführte Klappe zuverlässig in ihrer bestimmungsgemäßen Endlage fixiert werden. In dieser bestimmungsgemäßen bzw. definierten Endlage der ausgeklappten Klappe wird sichergestellt, dass die mobile Anzeigeeinrichtung in einer geeigneten Gebrauchsstellung im Fahrzeuginnenraum angeordnet ist.

Sowohl seitens der mobilen Anzeigeeinrichtung als auch seitens der integrierbaren Anzeigeschnittstelle können Mechanismen vorgesehen sein, mittels welchen die Fixierung der ausgeklappten Klappe innerhalb des Aufnahmebereichs der Anzeigeschnittstelle gelöst werden kann, sodass ein Fahrzeuginsasse bei Bedarf die zuvor noch an der Anzeigeschnittstelle fixierte mobile Anzeigeeinrichtung entnehmen kann.

Ein wesentlicher Vorteil des erfindungsgemäßen Anzeigesystems liegt darin, dass Entwicklungszyklen des betreffenden Fahrzeugs nicht mehr an Entwicklungszyklen der mobilen Anzeigeeinrichtung gekoppelt sein müssen. So können bezüglich der mobilen Anzeigeeinrichtung beispielsweise wesentlich kürzere Entwicklungszyklen bzw. Innovationszyklen durchlaufen werden, sodass mittels der mobilen Anzeigeeinrichtung möglichst schnell und flexibel auf neue Softwareanforderungen seitens Apps und dergleichen reagiert werden kann.

Zudem ist es bei dem erfindungsgemäßen Anzeigesystem beispielsweise im Zuge des autonomen Fahrens möglich, dass sogar ein Fahrer die mobile Anzeigeeinrichtung bei Bedarf von der im Fahrzeuginnenraum integrierbaren Anzeigeschnittstelle entfernen und die mobile Anzeigeeinrichtung in seine Hände nehmen kann, zumindest solange das betreffende Fahrzeug autonom fährt. Je nach dargestellten Inhalten ist es so möglich, die mobile Anzeigeeinrichtung bzw. ein darauf laufendes Programm besonders ergonomisch bedienen zu können. Sowohl der Blickwinkel als auch die Erreichbarkeit der mobilen Anzeigeeinrichtung, insbesondere wenn diese über einen Touchscreen verfügt, kann so besonders einfach gewährleistet werden.

Darüber hinaus ist es beispielsweise auch möglich, dass Mitfahrer im Fahrzeug die mobile Anzeigeeinrichtung bei Bedarf einfach von der Anzeigeschnittstelle lösen und die mobile Anzeigeeinrichtung so in ihren Händen halten und besonders einfach bedienen können, je nachdem was mittels der mobilen Anzeigeeinrichtung gerade dargestellt wird. Ein weiterer Vorteil des erfindungsgemäßen Anzeigesystems liegt darin, dass die mobile Anzeigeeinrichtung - sobald sie mittels der integrierbaren Anzeigeschnittstelle aufgenommen und mittels der im Aufnahmebereich angeordneten Fixierstellung fixiert worden ist - höchsten Crashanforderungen genügen kann.

Denn mittels der Fixiereinrichtung der Anzeigeschnittstelle kann zuverlässig sichergestellt werden, dass die mobile Anzeigeeinrichtung in ihrer bestimmungsgemäßen Gebrauchsposition gehalten bzw. fixiert wird. Selbst in einer Unfallsituation des Fahrzeugs kann so jederzeit sichergestellt werden, dass die mobile Anzeigeeinrichtung fest im Fahrzeuginnenraum verankert bleibt. Selbst wenn sich das Fahrzeug beispielsweise überschlagen sollte, kann so sichergestellt werden, dass die mobile Anzeigeeinrichtung zuverlässig an der im Fahrzeuginnenraum integrierten Anzeigeschnittstelle gehalten wird.

Zudem ist es bei dem erfindungsgemäßen Anzeigesystem beispielsweise auch möglich, dass ein Benutzer die mobile Anzeigeeinrichtung nach dem Abstellen des Fahrzeugs einfach mitnimmt. Dadurch können sich vielfältige Vorteile ergeben. So ist es beispielsweise möglich, dass der Benutzer mittels der mobilen Anzeigeeinrichtung schon vorab eine Route planen kann. Wenn er sich danach wieder in sein Fahrzeug setzt, muss er die mobile Anzeigeeinrichtung einfach wieder an der Anzeigeschnittstelle einstecken und kann danach die vorkonfigurierte Route abrufen und sich zu seinem gewünschten Ziel lotsen lassen. Insbesondere kann die mobile Anzeigeeinrichtung eine Datenschnittstelle aufweisen, die mit einer entsprechenden Datenschnittstelle der Anzeigeschnittstelle zusammenwirken kann, sodass verschiedenste Daten zwischen der mobilen Anzeigeeinrichtung und dem Fahrzeug ausgetauscht werden können. Dies kann sowohl drahtlos als auch drahtgebunden erfolgen. So ist es beispielsweise möglich, verschiedenste Fahrzeuginformationen mittels der mobilen Anzeigeeinrichtung wiederzugeben. Auch kann die mobile Anzeigeeinrichtung beispielsweise dazu genutzt werden, verschiedene Fahrzeugfunktionen, wie beispielsweise Einstellungen an der Klimatisierung und dergleichen vorzunehmen. Insgesamt wird durch das erfindungsgemäße Anzeigesystem also ein besonders flexibel nutzbares und sicheres Anzeigesystem für ein Fahrzeug bereitgestellt.

Eine mögliche Ausführungsform der Erfindung sieht vor, dass die Fixiereinrichtung einen formschlüssigen Fixiermechanismus aufweist, welcher dazu ausgelegt ist, in einer Fixierstellung die Klappe formschlüssig in der Endlage zu fixieren und in einer Freigabestellung eine Entnahme der Klappe aus dem Aufnahmebereich freizugeben. Mittels des formschlüssigen Fixiermechanismus ist es besonders zuverlässig und sicher möglich, die Klappe in der Endlage zu fixieren, in Folge dessen natürlich auch die mobile Anzeigeeinrichtung besonders zuverlässig im Fahrzeuginnenraum fixiert gehalten werden kann.

Eine weitere mögliche Ausführungsform der Erfindung sieht vor, dass der formschlüssige Fixiermechanismus eine zwischen der Freigabestellung und der Fixierstellung verschwenkbare Drehfalle zum Aufnehmen eines an der Klappe angeordneten Bolzens aufweist, wobei beim Bewegen der Klappe in die Endlage der Bolzen entlang einer Einführschräge der Drehfalle zwischen zwei Schenkel der in der Freigabestellung angeordneten Drehfalle geleitet und diese in die Fixierstellung verschwenkt, in welcher die Schenkel der Drehfalle eine Bewegung des Bolzens aus der Gebrauchsstellung heraus entgegengesetzt zur Einsteckrichtung sperren. Ein Fahrzeuginsasse muss also lediglich die mobile Anzeigeeinrichtung, genauer die ausgeklappte Klappe an der mobilen Anzeigeeinrichtung, in den Aufnahmebereich entlang der Einsteckrichtung einstecken bzw. hineinbewegen. Der an der Klappe angebrachte Bolzen gelangt dann automatisch in Kontakt mit der besagten Einführschräge der Drehfalle, an welche sich einer der beiden Schenkel der Drehfalle anschließt. Die Einführschräge ist dabei ein wenig beabstandet von einer Drehachse der Drehfalle, in Folge dessen der Bolzen durch Kraftausübung auf die Einführschräge beginnt, die Drehfalle in ihre Fixierstellung zu verschwenken. Gleichzeitig wandert der Bolzen zwischen die beiden Schenkel der Drehfalle. Ist die Fixierstellung einmal erreicht, verhindern die beiden Schenkel, zwischen denen der Bolzen angeordnet ist, eine Bewegung des Bolzens aus der Gebrauchsstellung heraus entgegengesetzt zur Einsteckrichtung. Mit anderen Worten befinden sich bezogen auf die Einsteckrichtung die Schenkel oberhalb bzw. unterhalb des Bolzens, der Bolzen ist also in der Fixierstellung der Drehfalle bezogen auf die Einsteckrichtung zwischen den beiden Schenkeln der Drehfalle angeordnet. Mittels der Drehfalle wird also eine besonders einfache und zuverlässige Fixierung des Bolzens, somit der Klappe und letztlich der mobilen Anzeigeeinrichtung in ihrer Gebrauchsstellung ermöglicht. Alternativ oder zusätzlich kann beispielsweise als Teil des Fixiermechanismus auch ein Push-Push-Mechanismus vorgesehen sein. In dem Fall muss ein Benutzer die mobile Anzeigeeinrichtung ebenfalls einfach nur in den Aufnahmebereich hineinstecken bzw. hineindrücken. Der Push-Push-Mechanismus sorgt dann dafür, dass die mobile Anzeigeeinrichtung, genauer die Klappe, beispielsweise wiederum mittels eines Bolzens versehen, entsprechend fixiert wird. Durch erneute Druckausübung entlang der Einsteckrichtung auf die mobile Anzeigeeinrichtung kann dann der Push-Push-Mechanismus wiederum gelöst werden, sodass die mobile Anzeigeeinrichtung zur Entnahme freigegeben wird.

Im Zusammenhang mit der Drehfalle kann es vorgesehen sein, dass die Drehfalle nur in Richtung der Fixierstellung frei verschwenkbar ist, wobei die Fixiereinrichtung einen Mechanismus aufweist, welcher dazu ausgelegt ist, eine Verschwenkung der Drehfalle in Richtung der Freigabestellung zu sperren und nur bei Vorliegen einer Freigabebedingung eine Verschwenkung in Richtung der Freigabestellung zu ermöglichen. Mit anderen Worten kann die Drehfalle also nur in eine Drehrichtung, nämlich in Richtung der Fixierstellung frei verschwenkt werden. In entgegengesetzter Richtung kann die Drehfalle hingegen nicht frei verschwenkt werden, weil der besagte Mechanismus dies verhindert. Bei der Freigabebedingung kann es sich beispielsweise um ein Freigabesignal handeln, welches durch entsprechende Bedienung an der mobilen Anzeigeeinrichtung generiert werden kann. Alternativ oder zusätzlich ist es auch möglich, dass die Anzeigeschnittstelle ein derartiges Freigabesignal erzeugen kann, zum Beispiel wenn ein Benutzer einen entsprechenden Knopf oder ein anderweitiges Bedienelement an der Anzeigeschnittstelle betätigt. Auch ist es möglich, dass sowohl an der Anzeigeeinrichtung als auch an der Anzeigeschnittstelle oder anderweitig im Fahrzeug ein mechanischer Knopf vorgesehen ist, durch dessen Betätigung ein mechanisches Freigabesignal in Form der Freigabebedingung erzeugt werden kann. Wie auch immer die Freigabebedingung erzeugt und bereitgestellt wird, kann erst bei Vorliegen dieser Freigabebedingung eine Verschwenkung der Freigabestellung durch den Mechanismus ermöglicht werden. Ein versehentliches Lösen der Drehfalle kann so zuverlässig verhindert werden.

Eine weitere mögliche Ausführungsform der Erfindung sieht vor, dass der Mechanismus einen Motor aufweist, welcher dazu ausgelegt ist, die Verschwenkung der Drehfalle in Richtung der Freigabestellung zu sperren und bei Vorliegen der Freigabebedingung die Drehfalle aktiv in Richtung der Freigabestellung zu bewegen. Der Motor kann beispielsweise einen selbsthemmenden Antrieb aufweisen, sodass dieser nur in eine Richtung freidrehen kann, welche mit der Drehrichtung der Drehfalle in Richtung der Fixierstellung korrespondiert. Liegt die Freigabebedingung vor, erhält der Motor ein entsprechendes Signal, in Folge dessen der Motor dann die Drehfalle aktiv in Richtung der Freigabestellung verschwenkt und zwar bis die Freigabestellung erreicht wurde. In der Freigabestellung fluchten die beiden Schenkel der Drehfalle zumindest im Wesentlichen mit der besagten Einsteckrichtung, sodass diese ein Herausbewegen des Bolzens entgegen der Einsteckrichtung nicht mehr sperren. In Folge dessen kann die Klappe, an welcher der Bolzen befestigt ist, ganz einfach aus dem Aufnahmebereich herausgezogen werden, sodass die mobile Anzeigeeinrichtung ganz einfach entnommen werden kann.

Gemäß einer weiteren möglichen Ausführungsform der Erfindung ist es vorgesehen, dass die Klappe eine Neigungssperre aufweist, welche beim Bewegen der Klappe in die Endstellung mittels einer Kontur der Anzeigeschnittstelle in eine Sperrstellung bewegt wird, in welcher die Neigungssperre die Klappe in einer vorgegebenen Winkelposition zur restlichen Anzeigeeinrichtung fixiert. Wird also die Klappe in den Aufnahmebereich hineinbewegt bzw. hineingesteckt, und zwar so weit, bis die Klappe die Endstellung erreicht hat, sorgt die besagte Kontur an der Anzeigeschnittstelle dafür, dass die in die Klappe integrierte Neigungssperre in ihre besagte Sperrstellung bewegt wird, in der die Neigungssperre die Klappe in einer vorgegebenen Winkelposition zur restlichen Anzeigeeinrichtung fixiert. Dadurch kann zuverlässig sichergestellt werden, dass die Klappe nicht mehr relativ zur restlichen mobilen Anzeigeeinrichtung verschwenkt werden kann, wenn besagte Endstellung der Klappe einmal im Aufnahmebereich der Anzeigeschnittstelle erreicht wurde. So kann sichergestellt werden, dass eine Neigung eines Anzeigebereichs der umliegenden Anzeigeeinrichtung relativ zum Fahrzeuginnenraum konstant gehalten werden kann. Selbst bei größeren Beschleunigungen, die durchaus im Fahrbetrieb eines Fahrzeugs auftreten können, kann so sichergestellt werden, dass ein Anzeigebereich der mobilen Anzeigeeinrichtung immer gut abgelesen werden kann. Zudem kann dadurch auch verhindert werden, dass die Anzeigeeinrichtung aufgrund von auftretenden Beschleunigungen im Fahrbetrieb hin und her verschwenkt wird, selbst wenn die Anzeigeeinrichtung relativ groß und schwer sein sollte. Zudem können Klappergeräusche verhindert werden, da die in der Gebrauchsstellung angeordnete Anzeigeeinrichtung sich nicht relativ zum Fahrzeug oder zu ihrer Klappe bewegen kann.

Eine alternative mögliche Ausführungsform der Erfindung sieht vor, dass die Klappe mittels wenigstens eines Gelenks verschwenkbar an der restlichen Anzeigeeinrichtung gelagert ist, welches zumindest so schwergängig ist, dass zumindest allein schwerkraftbedingt keine Winkeländerung zwischen der Klappe und der restlichen Anzeigeeinrichtung auftritt.

Insbesondere bei an der Anzeigeschnittstelle fixierter Anzeigeeinrichtung kann dadurch ebenfalls sichergestellt werden, dass die Neigung der mobilen Anzeigeeinrichtung relativ zum Fahrzeuginnenraum nicht ohne Weiteres verändert werden kann, insbesondere sich nicht selbstständig verändert, insbesondere nicht schwerkraftbedingt absackt oder dergleichen. Der Vorteil hierbei ist allerdings, dass ein Fahrzeuginsasse durch entsprechende Kraftaufbringung einen zwischen der Klappe und der restlichen Anzeigeeinrichtung eingeschlossenen Winkel verändern und somit auch eine Neigung eines Anzeigebereichs der Anzeigeeinrichtung bei im Fahrzeug fixiertem Zustand verändern kann. So können beispielsweise unterschiedlich große Fahrzeuginsassen passend zu ihrer Kopfposition und Perspektive die im Fahrzeug fixierte mobile Anzeigeeinrichtung in ihrer Neigung so verändern, dass sie die Anzeigeeinrichtung besonders bequem und gut ablesen können. Beispielsweise kann auch ein Mechanismus vorgesehen sein, mittels welchem die Schwergängigkeit des Gelenks eingestellt oder das Gelenk sogar vollständig gesperrt werden kann. So kann ein Fahrzeuginsasse z.B. die Schwergängigkeit zuerst reduzieren, die gewünschte Neigung der Anzeigeeinrichtung einstellen und dann die Schwergängigkeit erhöhen oder das Gelenk sogar sperren.

Erfindungsgemäß weist die Fixiereinrichtung einen kraftschlüssigen Fixiermechanismus auf, welcher dazu ausgelegt ist, in einer Fixierstellung die Klappe kraftschlüssig in der Endlage zu fixieren und in einer Freigabestellung eine Entnahme der Klappe aus dem Aufnahmebereich freizugeben. So kann die Klappe insbesondere spielfrei innerhalb des Aufnahmebereichs fixiert gehalten werden. Zum einen trägt der kraftschlüssige Fixiermechanismus also dazu bei, dass die mobile Anzeigeeinrichtung besonders zuverlässig und fest im Fahrzeuginnenraum fixiert gehalten werden kann. Zum anderen kann der kraftschlüssige Fixiermechanismus auch dazu beitragen, dass insbesondere keine Klappergeräusche oder dergleichen auftreten, da eine Relativbewegung zwischen der Klappe und insbesondere dem Aufnahmebereich der Anzeigeschnittstelle verhindert werden kann.

Gemäß einer weiteren möglichen Ausführungsform der Erfindung ist es vorgesehen, dass der kraftschlüssige Fixiermechanismus in der Fixierstellung die in der Endstellung angeordnete Klappe quer zur Einsteckrichtung an eine Anlagefläche des Aufnahmebereichs drückt. So kann die Klappe zwischen dem kraftschlüssigen Fixiermechanismus und der Anlagefläche des Aufnahmebereichs eingeklemmt werden. Dies kann beispielsweise über die gesamte Breite der Klappe erfolgen. So wird die Klappe besonders zuverlässig innerhalb des Aufnahmebereichs fixiert und Relativbewegungen zwischen der Klappe und dem Aufnahmebereich können so unterbunden werden.

Erfindungsgemäß weist der kraftschlüssige Fixiermechanismus wenigstens einen drehbar gelagerten Exzenter aufweist, welcher in der Fixierstellung an der in der Endstellung angeordneten Klappe anliegt und in der Freigabestellung von der Klappe beabstandet ist. Auf diese Weise ist es ganz einfach möglich, mittels des Exzenters die in der Endstellung befindliche Klappe kraftschlüssig zu fixieren und auch wieder freizugeben, sodass der Exzenter eine Entnahme der Klappe aus dem Aufnahmebereich nicht behindert und genauso ein Einstecken der Klappe in den Aufnahmebereich nicht behindert.

Eine weitere mögliche Ausführungsform der Erfindung sieht vor, dass der kraftschlüssige Fixiermechanismus und der formschlüssige Fixiermechanismus bezüglich ihrer Bewegung von der jeweiligen Freigabestellung in die jeweilige Fixierstellung miteinander gekoppelt sind. Eine Verdrehung bzw. Verschwenkung der zuvor erwähnten Drehfalle kann also an eine Verschwenkung des drehbar gelagerten Exzenters und umgekehrt gekoppelt sein. Gleitet der an der Klappe angeordnete Bolzen also zwischen die Schenkel der Drehfalle, wobei die Drehfalle dann in ihre Fixierstellung verschwenkt wird, bewirkt die Bewegungskopplung zwischen Drehfalle und Exzenter, dass der Exzenter automatisch ebenfalls von seiner Freigabestellung in die Fixierstellung bewegt wird, sodass bei Erreichen der Endstellung der Klappe innerhalb des Aufnahmebereichs diese einerseits kraftschlüssig und andererseits auch noch formschlüssig fixiert wird. Die Bewegungskopplung zwischen kraftschlüssigem und formschlüssigem Fixiermechanismus ist natürlich nicht auf die Beispiele mit dem Exzenter und der Drehfalle allein beschränkt. Unabhängig von der konkreten Ausgestaltung des kraftschlüssigen und des formschlüssigen Fixiermechanismus kann es ganz allgemein vorgesehen sein, dass zwischen beiden Mechanismen eine Bewegungskopplung vorhanden ist. Dadurch kann auf besonders einfache und zuverlässige Weise sowohl eine kraftschlüssige als auch eine formschlüssige Fixierung der in ihrer Endstellung im Aufnahmebereich angeordneten Klappe sichergestellt werden.

Gemäß einer weiteren möglichen Ausführungsform der Erfindung ist es vorgesehen, dass die Anzeigeschnittstelle eine Abdeckung zum Abdecken des Aufnahmebereichs aufweist, welche durch Kraftbeaufschlagung und/oder elektrisch in eine den Aufnahmebereich freigebende Stellung bewegbar ist. Durch die Abdeckung wird der Aufnahmebereich also davor geschützt, dass andere Fremdkörper, Dreck oder dergleichen in den Aufnahmebereich gelangen können. Beispielsweise ist es möglich, einfach die ausgeklappte Klappe auf die Abdeckung zu drücken, in Folge dessen diese dann beispielsweise wegschwenkt und den Aufnahmebereich freigibt. Genauso ist es auch denkbar, dass die Anzeigeschnittstelle beispielsweise einen Näherungssensor aufweist, welche das Heranführen der ausgeklappten Klappe an den Aufnahmebereich erkennt und in Folge dessen die Abdeckung automatisch in eine den Aufnahmebereich freigebende Stellung bewegt. In dem Fall kann es beispielsweise vorgesehen sein, dass die Abdeckung definitiv schon in ihrer den Aufnahmebereich freigebenden Stellung positioniert ist, noch bevor die Klappe die Abdeckung überhaupt berührt. So wirkt es auf den Fahrzeuginsassen als ob das Fahrzeug die Intention des Fahrzeuginsassen, nämlich die ausgeklappte Klappe in den Aufnahmebereich einzuführen, automatisch erkennen bzw. vorhersehen kann.

Gemäß einer weiteren möglichen Ausführungsform der Erfindung ist es vorgesehen, dass die Anzeigeeinrichtung eine lösbare Verriegelung aufweist, mittels welcher die Klappe in ihrer an die restliche Anzeigeeinrichtung angeklappten Stellung fixierbar ist. Solange die Anzeigeeinrichtung also nicht fahrzeugseitig fixiert ist oder die Klappe einfach nicht in ihrer ausgeklappten Stellung angeordnet sein muss, kann mittels der Verriegelung sichergestellt werden, dass die Klappe in ihrer an die restliche Anzeigeeinrichtung angeklappten Stellung verbleibt. Beispielsweise kann ein Gehäuse der Anzeigeeinrichtung eine Aussparung aufweisen, in welcher die eingeklappte Klappe bündig mit dem Gehäuse abschließend Platz findet, wobei die Verriegelung die Klappe in dieser Stellung halten kann.

An der Anzeigeeinrichtung kann beispielsweise ein mechanischer Knopf oder dergleichen vorgesehen sein, welcher die Verriegelung lösen kann. Alternativ oder zusätzlich kann es auch vorgesehen sein, dass die Verriegelung elektronisch gelöst werden kann, beispielsweise indem ein angezeigtes virtuelles Bedienelement an der Anzeigeeinrichtung betätigt wird, wobei in dem Fall die Anzeigeeinrichtung dann als Touchscreen ausgebildet ist.

Eine weitere mögliche Ausführungsform der Erfindung sieht vor, dass die Anzeigeeinrichtung wenigstens ein Federelement aufweist, welches die Klappe in ihre von der restlichen Anzeigeeinrichtung weggeklappte Stellung drückt oder zieht. Insbesondere in Kombination mit der lösbaren Verriegelung ist dies besonders sinnvoll. Wurde die Verriegelung einmal gelöst, so sorgt das Federelement dafür, dass die Klappe in Richtung der weggeklappten Stellung automatisch nach außen schwenkt. Beispielsweise kann ein Anschlag oder dergleichen vorgesehen sein, sodass die Aufschwenkbewegung der Klappe in einer definierten Winkelstellung automatisch stoppt. Durch das Federelement und insbesondere in Kombination mit dem Anschlag kann auf ganz einfache Weise sichergestellt werden, dass die Klappe in einer ganz definierten Winkelstellung verbleibt. Dies erleichtert es einem Fahrzeuginsassen erheblich, die Klappe in besagten Aufnahmebereich einzuführen. Zudem muss er die Klappe nicht von Hand nach außen klappen, was die Handhabung der Klappe erleichtert und bequemer macht.

Eine weitere mögliche Ausführungsform der Erfindung sieht vor, dass die Anzeigeschnittstelle einen Federmechanismus aufweist, welcher in der Endlage der Klappe eine Kraft auf diese entgegengesetzt zur Einsteckrichtung ausübt, sodass sobald die Fixiereinrichtung die Klappe nicht mehr fixiert, die Klappe mittels des Federmechanismus entgegengesetzt zur Einsteckrichtung ein Stück aus dem Aufnahmebereich befördert wird. Der Federmechanismus kann beispielsweise eine oder mehrere Federelemente in der Art von Federtonnen oder dergleichen aufweisen, welche beim Einführen der Klappe in der Einsteckrichtung gestaucht werden. Sobald die Fixierung der Klappe innerhalb des Aufnahmebereichs gelöst wird, bewirken die Federtonnen, dass die Klappe entgegengesetzt zur Einsteckrichtung ein Stück weit aus dem Aufnahmebereich herausbewegt wird. Ein Fahrzeuginsasse erkennt so auf ganz einfache Weise, dass er die mobile Anzeigeeinrichtung nun von der Anzeigeschnittstelle entfernen bzw. aus dieser entnehmen kann.

Gemäß einer weiteren möglichen Ausgestaltung der Erfindung ist es vorgesehen, dass die Anzeigeschnittstelle eine oberhalb vom Aufnahmebereich angeordnete Blende mit einer Einstecköffnung zum Einstecken der Klappe in den Aufnahmebereich aufweist, wobei ein sich zumindest über die Breite der Einstecköffnung erstreckender und an diesen angrenzender Randbereich der Blende schräg bis zur Einstecköffnung abfällt. Beispielsweise kann ein Teil der Blende rund um die Einstecköffnung konisch ausgebildet sein, sodass ein Nutzer die ausgeklappte Klappe lediglich grob im Bereich der Einstecköffnung platzieren muss. Kommt die ausgeklappte Klappe mit ihrer Unterseite beispielsweise in Anlage mit dem schräg abfallenden Randbereich, so gleitet die Klappe mehr oder weniger automatisch bis zur Einstecköffnung. Dies funktioniert insbesondere dann besonders zuverlässig und einfach, wenn dieser Vorgang durch die Schwerkraft unterstützt wird, also die Einsteckrichtung zumindest im Wesentlichen in Fahrzeughochrichtung nach unten erfolgt. Aber selbst wenn die Einsteckrichtung nicht in Fahrzeughochrichtung verläuft, kann der besagte Randbereich, der schräg bis zur Einstecköffnung abfällt, dennoch das quasi blinde Einstecken der Klappe in den Aufnahmebereich erheblich vereinfachen. Alternativ oder zusätzlich kann es beispielsweise auch vorgesehen sein, dass eine Kamera an der Rückseite der Anzeigeeinrichtung angeordnet ist, oder beispielsweise auch direkt an der Klappe. Bei einer Annäherung an die Einstecköffnung bzw. an den Aufnahmebereich kann beispielsweise automatisch eine App auf der mobilen Anzeigeeinrichtung gestartet werden, welche ein mittels der Kamera aufgenommenes Bild anzeigt. So ist es beispielsweise denkbar, dass in einem Anzeigebereich der mobilen Anzeigeeinrichtung das Kamerabild in Kombination mit einem Fadenkreuz oder ähnlichem angezeigt wird, wobei das Fadenkreuz automatisch dort positioniert wird, wo sich die Einsteckrichtung bzw. der Aufnahmebereich befindet. So kann der betreffende Benutzer auch wenn die Einstecköffnung bzw. der Aufnahmebereich durch die mobile Anzeigeeinrichtung verdeckt wird, dennoch ganz einfach erkennen, wie er die mobile Anzeigeeinrichtung bewegen muss, um die Klappe in die Einstecköffnung bzw. in den Aufnahmebereich einzufädeln.

Die erfindungsgemäße mobile Anzeigeeinrichtung für das erfindungsgemäße Anzeigesystem oder eine mögliche Ausgestaltung des erfindungsgemäßen Anzeigesystems umfasst eine aus einer eingeklappten Stellung ausklappbare Klappe zum Fixieren der Anzeigeeinrichtung in einem Fahrzeuginnenraum des Fahrzeugs, wobei die Anzeigeeinrichtung dazu ausgelegt ist, mit der Anzeigeschnittstelle zusammenzuwirken. Die vorstehend im Zusammenhang mit dem Anzeigesystem bereits erläuterten Merkmale hinsichtlich der Anzeigeeinrichtung betreffen weitere mögliche Ausgestaltungen der Anzeigeeinrichtung.

Die erfindungsgemäße Anzeigeschnittstelle für das erfindungsgemäße Anzeigesystem oder für die möglichen Ausgestaltungen des erfindungsgemäßen Anzeigesystems ist in einem Fahrzeuginnenraum integrierbar und zum Aufnehmen sowie Fixieren der mobilen Anzeigeeinrichtung des Anzeigesystems in einer definierten Gebrauchsstellung ausgelegt, wobei die Anzeigeschnittstelle einen als Vertiefung ausgebildeten Aufnahmebereich umfasst, in welchen die ausgeklappte Klappe in einer Einsteckrichtung einführbar und mittels einer im Aufnahmebereich angeordneten Fixiereinrichtung in einer Endlage fixierbar ist, in welcher die mobile Anzeigeeinrichtung in der Gebrauchsstellung angeordnet ist. Die vorstehend im Zusammenhang mit dem Anzeigesystem bereits erläuterten Merkmale hinsichtlich der Anzeigeschnittstelle betreffen weitere mögliche Ausgestaltungen der Anzeigeschnittstelle.

Weitere mögliche Vorteile, Merkmale und Einzelheiten der Erfindung ergeben sich aus der nachfolgenden Beschreibung bevorzugter Ausführungsbeispiele sowie anhand der Figuren. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Kurze Figurenbeschreibung

Die Zeichnung zeigt in:
- Fig. 1: ein Anzeigesystem für ein Fahrzeug in einer Perspektivansicht, umfassend eine mobile Anzeigeeinrichtung und eine im Fahrzeuginnenraum integrierte Anzeigeschnittstelle, an welcher die mobile Anzeigeeinrichtung aufgenommen und fixiert ist;
- Fig. 2: eine Perspektivansicht der Anzeigeschnittstelle von schräg oben, wobei diese in einem mittleren Bereich eine oberhalb von einem Aufnahmebereich angeordnete Blende mit einer Einstecköffnung aufweist, welche von einer Abdeckung verdeckt wird;
- Fig. 3: eine Draufsicht auf die Anzeigeschnittstelle, wobei besagte Abdeckung wegbewegt worden ist, sodass der Blick durch die Einstecköffnung auf das Innere des Aufnahmebereichs freigegeben wird;
- Fig. 4: eine perspektivische Rückansicht auf die mobile Anzeigeeinrichtung, welche eine ausklappbare Klappe aufweist, die in den Aufnahmebereich der Anzeigeschnittstelle eingesteckt werden kann;
- Fig. 5: eine perspektivische Rückansicht auf die mobile Anzeigeeinrichtung, wobei ein rückseitiges Gehäuseteil weggelassen wurde, sodass der Blick auf eine lösbare Verriegelung freigegeben wird, mittels welcher die Klappe in ihrer an die restliche Anzeigeeinrichtung angeklappten Stellung fixierbar ist;
- Fig. 6: eine weitere perspektivische Rückansicht auf die mobile Anzeigeeinrichtung bei ausgeklappter Klappe, wobei ein Gehäuseteil der Klappe weggelassen wurde, sodass der Blick auf das Innere der Klappe freigegeben wird;
- Fig. 7: eine Perspektivansicht, in welcher nur die Klappe und nicht die restliche mobile Anzeigeeinrichtung gezeigt ist, nachdem die Klappe in den Aufnahmebereich der Anzeigeschnittstelle gesteckt wurde;
- Fig. 8: eine weitere Ansicht, in welcher die in den Aufnahmebereich eingesteckte Klappe dargestellt ist;
- Fig. 9: eine weitere Perspektivansicht, in welcher die in den Aufnahmebereich eingesteckte Klappe dargestellt ist, wobei der Blick auf das Innere der Klappe und des Aufnahmebereichs freigegeben ist;
- Fig. 10: eine perspektivische Rückansicht auf die in den Aufnahmebereich eingesteckte Klappe der mobilen Anzeigeeinrichtung; und in
- Fig. 11: eine teilweise geschnittene Seitenansicht auf das Anzeigesystem während die mobile Anzeigeeinrichtung an der Anzeigeschnittstelle fixiert ist.

In den Figuren sind gleiche oder funktionsgleiche Elemente mit den gleichen Bezugszeichen versehen worden.

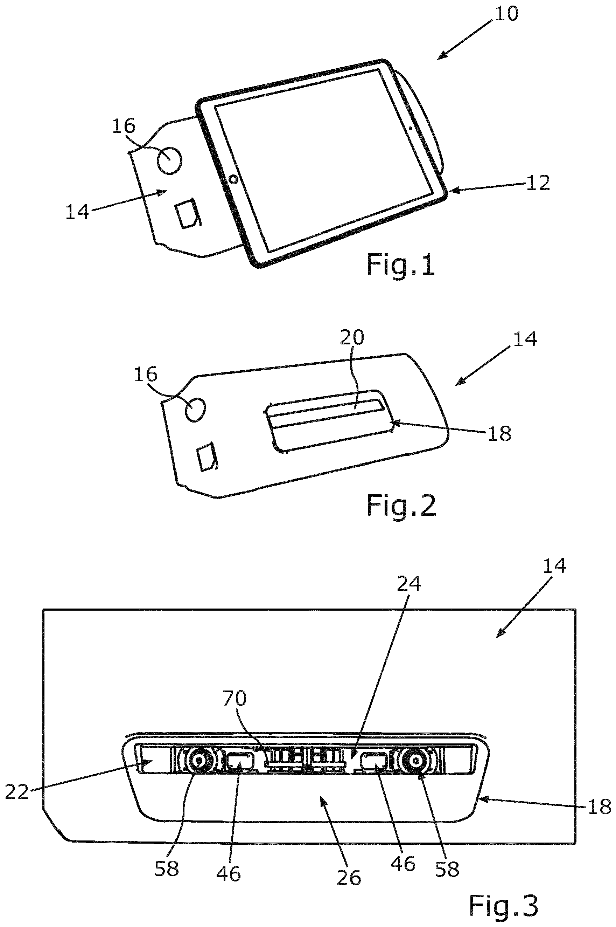

Ein Anzeigesystem 10 für ein Fahrzeug ist in einer Perspektivansicht in Fig. 1 gezeigt. Das Anzeigesystem 10 umfasst eine mobile Anzeigeeinrichtung 12 und eine in einem Fahrzeuginnenraum des betreffenden Fahrzeugs integrierbare Anzeigeschnittstelle 14 zum Aufnehmen und Fixieren der mobilen Anzeigeeinrichtung 12. Bei der mobilen Anzeigeeinrichtung 12 kann es sich beispielsweise, wie hier angedeutet, um einen Tabletcomputer handeln. Auch kann es sich bei der mobilen Anzeigeeinrichtung 12 beispielsweise um ein reines Display oder auch beispielsweise um ein Smartphone handeln.

Die im Fahrzeuginnenraum integrierbare Anzeigeschnittstelle 14 umfasst eine Taste 16, mittels welcher die Fixierung der mobilen Anzeigeeinrichtung 12 an der Anzeigeschnittstelle 14 gelöst werden kann. Alternativ oder zusätzlich kann auch die mobile Anzeigeeinrichtung 12 eine Taste, sei es eine mechanische und/oder eine virtuelle im Bereich des Displays, aufweisen, mittels welcher die Fixierung der mobilen Anzeigeeinrichtung 12 an der Anzeigeschnittstelle 14 gelöst werden kann.

In Fig. 2 ist die im Fahrzeuginnenraum integrierbare Anzeigeschnittstelle 14 allein in einer Perspektivansicht von schräg oben gezeigt. Die Anzeigeschnittstelle 14 umfasst eine Blende 18 und eine Abdeckung 20.

In Fig. 3 ist die Anzeigeschnittstelle 14 in einer Draufsicht von oben gezeigt. Die zuvor in Fig. 2 gezeigte Abdeckung 20 ist hier nicht mehr zu erkennen, da diese von einer Einstecköffnung 22 innerhalb der Blende 18 wegbewegt wurde. In der vorliegenden Darstellung wird der Blick auf einen Aufnahmebereich 24 freigegeben, dessen Funktion anhand der nachfolgenden Figuren noch genauer erläutert werden wird. Zumindest ein sich über die Breite der Einstecköffnung 22 erstreckender und an dieser angrenzender Randbereich 26 fällt schräg bis bzw. in Richtung der Einstecköffnung 22 ab.

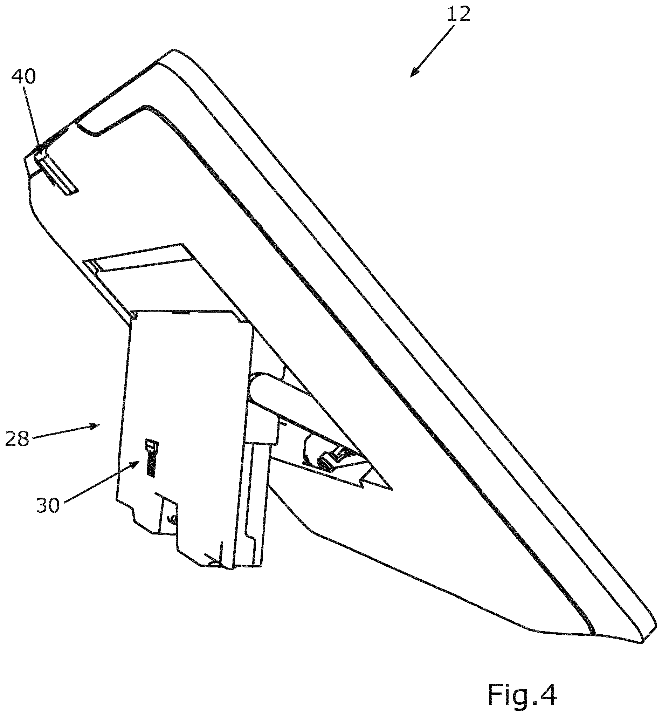

In Fig. 4 ist die Anzeigeeinrichtung 12 in einer perspektivischen Rückansicht gezeigt. Wie man hier erkennen kann, weist die mobile Anzeigeeinrichtung 12 an ihrer nicht näher bezeichneten Rückseite eine ausklappbare Klappe 28 auf. Diese ausklappbare Klappe 28 dient zum Fixieren der mobilen Anzeigeeinrichtung 12 im Fahrzeuginnenraum eines Fahrzeugs. Genauer dient die ausklappbare Klappe 28 in ihrer ausgeklappten bzw. von der Rückseite bzw. der restlichen mobilen Anzeigeeinrichtung 12 weggeklappten Stellung dazu, diese durch die Einstecköffnung 22 in den Aufnahmebereich 24 der Anzeigeschnittstelle 14 einzustecken. Die Klappe 28 kann auch als Standfuß für die mobile Anzeigeeinrichtung 12 dienen, sodass die mobile Anzeigeeinrichtung 12 unter Zuhilfenahme der ausgeklappten Klappe 28 beispielsweise auf einem Tisch oder einer anderen Unterlage schräg geneigt abgestellt werden kann.

Die Klappe 28 kann eine Schnittstelle 30 aufweisen, welche mit einer Schnittstelle innerhalb des Aufnahmebereichs 24 der Anzeigeschnittstelle 14 zusammenwirken kann. Über diese Schnittstelle 30 können beispielsweise Daten zwischen der mobilen Anzeigeeinrichtung 12 und der Anzeigeschnittstelle 14 bzw. dem betreffenden Fahrzeug ausgetauscht werden. Auch ist es beispielsweise möglich, die mobile Anzeigeeinrichtung 12 über die Schnittstelle 30 aufzuladen.

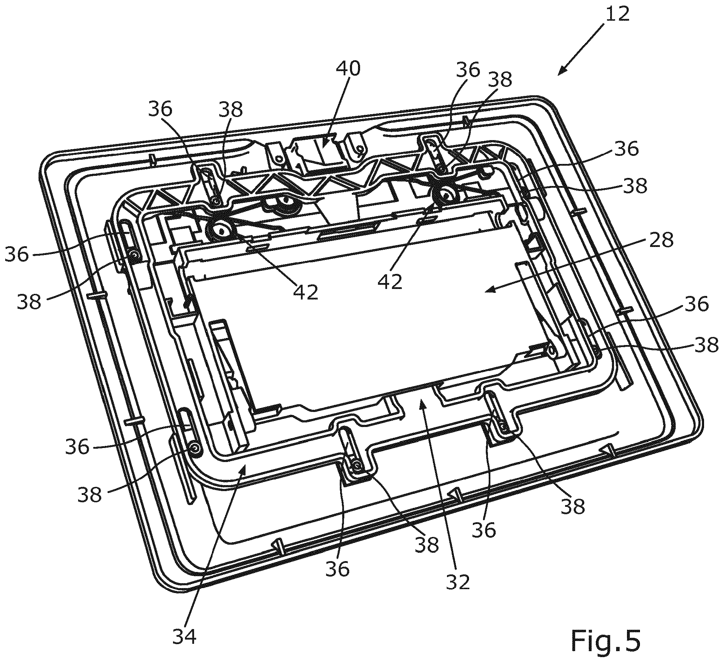

In Fig. 5 ist die mobile Anzeigeeinrichtung 12 in einer perspektivischen Rückansicht gezeigt, wobei eine Abdeckung bzw. ein rückseitiges Gehäuseteil weggelassen wurde, sodass man zum Teil ins Innere der Anzeigeeinrichtung 12 blicken kann. Die mobile Anzeigeeinrichtung 12 umfasst eine lösbare Verriegelung 32, mittels welcher die Klappe 28 in ihrer an die restliche Anzeigeeinrichtung 12 angeklappten Stellung fixierbar ist. Die Verriegelung 32 ist Teil von einer Art Rahmen 34, welcher zwischen einer hier gezeigten Verriegelungsstellung und einer abgesenkten Entriegelungsstellung bewegbar ist. In letzterer Stellung taucht die Verriegelung 32 nicht mehr von unten in die Klappe 28 ein, sodass diese problemlos von der restlichen mobilen Anzeigeeinrichtung 12 nach außen weggeschwenkt werden kann.

Der Rahmen 34 weist mehrere Langlöcher 36 auf, in denen jeweilige Stifte 38 angeordnet sind. Dadurch wird die Verschiebbarkeit des Rahmens 34 gewährleistet. Mittels einer Taste 40 kann der Rahmen 34 heruntergedrückt werden, um ihn von der hier gezeigten Stellung weiter nach unten zu drücken, in welcher die Verriegelung 32 dann nicht mehr von unten in die Klappe 28 eintaucht. Zwei Drehfedern 42 bringen eine Rückstellkraft auf den Rahmen 34 auf, welche den Rahmen 34 immer in seine hier gezeigte Verriegelungsstellung drücken bzw. ziehen. Ein Nutzer muss also aktiv die Taste 40 gedrückt halten, wenn die Verriegelung 32 nicht von unten in die Klappe 28 eintauchen soll. Die mobile Anzeigeeinrichtung 12 kann zudem ein hier nicht näher bezeichnetes Federelement aufweisen, welches die Klappe 28 in Richtung ihrer von der restlichen mobilen Anzeigeeinrichtung 12 weggeklappten Stellung beaufschlagt. Wurde also einmal die Verriegelung 32 gelöst, so schwenkt die Klappe 28 automatisch nach außen auf.

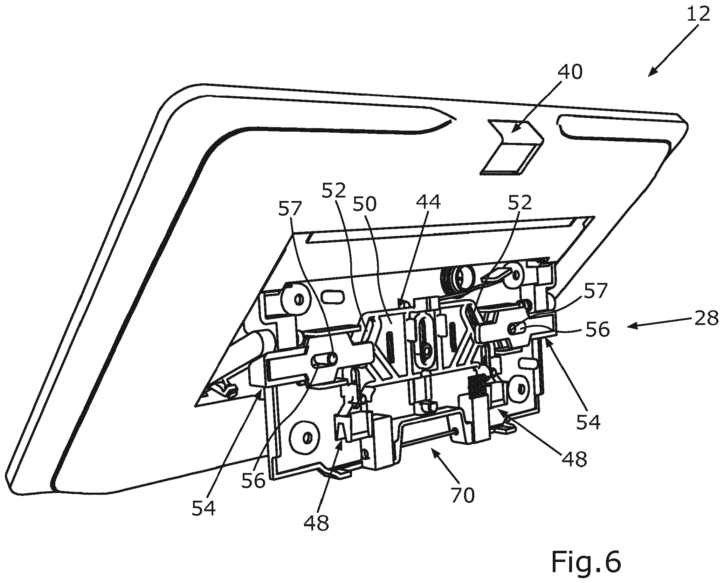

In Fig. 6 ist die mobile Anzeigeeinrichtung 12 in einer weiteren Perspektivansicht von schräg hinten gezeigt. Ein Gehäuseteil bzw. eine Abdeckung an der Klappe 28 wurde weggelassen, sodass man die darunterliegenden Elemente erkennen kann. Die Klappe 28 umfasst eine Neigungssperre 44, welche beim Bewegen der Klappe 28 in den Aufnahmebereich 24 (siehe Fig. 3) hinein mittels jeweiliger Konturen 46 in die hier gezeigte Sperrstellung bewegt wird, in welcher die Neigungssperre 44 die Klappe 28 in einer vorgegebenen Winkelposition zur restlichen Anzeigeeinrichtung 12 fixiert. Die Konturen 46 der Anzeigeschnittstelle 14 (siehe Fig. 3) sind in Form von Führungsdomen ausgebildet, welche in komplementäre Strukturen 48 der Neigungssperre 44 eingreifen können.

Die Neigungssperre 44 fungiert als Synchronsperre, die dafür sorgt, dass die Klappe 28 an beiden Außenseiten in einer bestimmten Winkelstellung stabil einrastet. Die besagten Konturen 46 im Aufnahmebereich 24 (siehe Fig. 3) dienen als Führungsstifte, welche in die korrespondierend dazu geformten Strukturen 48 eingreifen, wenn die Klappe in den Aufnahmebereich 24 hineinbewegt wird. Vorliegend sind die Strukturen 48 so geformt, dass diese die als Führungsstifte dienenden Konturen 46 umgreifen.

Beim Herunterdrücken der Klappe 28 in den Aufnahmebereich 24 kommen also die als Führungsdome ausgebildeten Konturen 46 in Kontakt mit den komplementären Strukturen 48 im Inneren der Klappe 28 bzw. der Neigungssperre 44. Die komplementären Strukturen 48 der Neigungssperre 44 werden dadurch nach oben gedrückt, in Folge dessen eine Platte 50 der Neigungssperre 44 ebenfalls nach oben gedrückt wird. In dieser Platte 50 sind schräg verlaufende Langlöcher 52 vorgesehen, in welche jeweilige Sperrriegel 54 eingreifen. Die Sperrriegel 54 weisen in Querrichtung verlaufende Langlöcher 56 auf, in welche jeweilige Stifte 57 eingreifen. Wandert nun durch entsprechenden Eingriff und durch entsprechende Verschiebung der komplementären Strukturen 48 die Platte 50 nach oben, so werden aufgrund der Schrägstellung der Langlöcher 52 in der Platte 50 die Sperrriegel 54 nach außen in ihre hier gezeigte Stellung gedrückt. Dadurch wird die Klappe 28 in ihrer hier gezeigten Winkelstellung gegenüber der restlichen Anzeigeeinrichtung 12 fixiert. Wurde die Klappe 28 also in ihrer Endstellung im Aufnahmebereich 24 positioniert, verhindert die Sperrriegel 54 eine Verschwenkung der Klappe 28 gegenüber der restlichen Anzeigeeinrichtung 12. Somit kann die Neigung der Anzeigeeinrichtung 12 auch nicht mehr gegenüber dem Fahrzeug, beispielsweise relativ zu einer Instrumententafel, verändert werden. Anstelle der Langlöcher 56 können auch zwei zueinander parallel verlaufende Führungen vorgesehen sein, um die Bewegung der Sperrriegel 54 nach außen und innen zu führen.

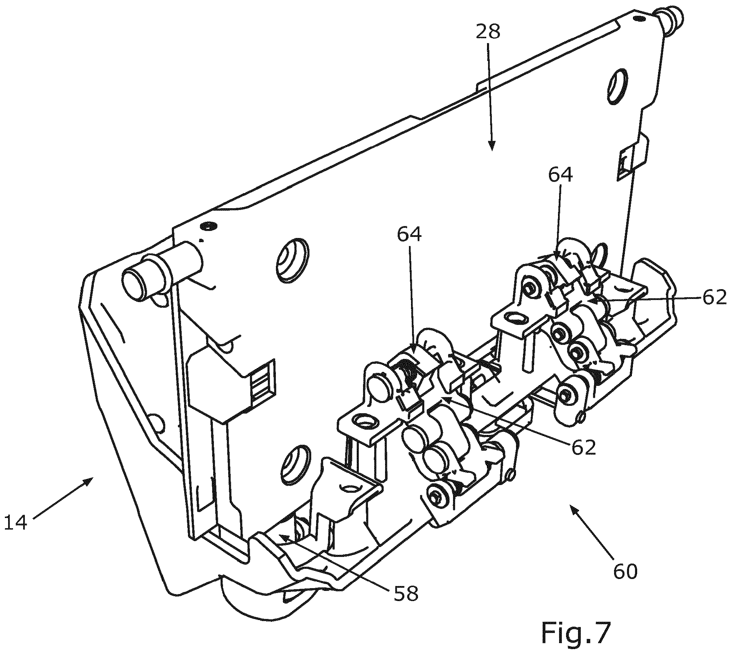

In Fig. 7 ist die Klappe 28 gezeigt, nachdem diese in den als Vertiefung ausgebildeten und hier nicht näher bezeichneten Aufnahmebereich 24 der Anzeigeschnittstelle 14 in ihrer Einsteckrichtung eingeführt worden ist. Die Klappe 28 befindet sich vorliegend in ihrer definierten Endstellung innerhalb des Aufnahmebereichs 24. Eine von zwei Federtonnen 58 ist vorliegend zu erkennen, auf welche die Klappe 28 von oben gedrückt wird, wenn diese in ihre hier gezeigte Endstellung bewegt wird. Die weitere hier nicht erkennbare Federtonne 58 ist gemäß der vorliegenden Darstellung auf der gegenüberliegenden Seite hinten rechts bzw. an der rechten äußeren Seite angeordnet. Beide Federtonnen 58 bilden einen Federmechanismus der Anzeigeschnittstelle 14, welche in der hier gezeigten Endlage der Klappe 28 eine Kraft auf diese entgegengesetzt zu ihrer Einsteckrichtung ausübt, sodass sobald eine Fixierung der Klappe 28 gelöst wurde, die Klappe 28 mittels der Federtonnen 58 entgegengesetzt zur Einsteckrichtung, gemäß der vorliegenden Darstellung also nach oben, ein Stück aus dem Aufnahmebereich 24 befördert wird.

Die im Fahrzeuginnenraum integrierbare Anzeigeschnittstelle 14 umfasst eine im Aufnahmebereich 24 angeordnete Fixiereinrichtung 60, welche dazu ausgebildet ist, die in ihrer Endlage angeordnete Klappe 28 in dieser Endlage zu fixieren. Die Fixiereinrichtung 60 umfasst einen kraftschlüssigen Fixiermechanismus 62, welcher dazu ausgelegt ist, in einer Fixierstellung die Klappe 28 in der Endlage zu fixieren und in einer Freigabestellung eine Entnahme der Klappe 28 aus dem Aufnahmebereich freizugeben. Der kraftschlüssige Fixiermechanismus 62 drückt in der hier gezeigten Fixierstellung die in der Endstellung angeordnete Klappe 28 quer zur Einsteckrichtung an eine hier nicht näher zu erkennende Anlagefläche des Aufnahmebereichs 24. Der kraftschlüssige Fixiermechanismus 62 umfasst vorliegend zwei drehbar gelagerte Exzenter 64, welche in der hier gezeigten Fixierstellung an der in der Endstellung angeordneten Klappe 28 anliegen und gegen die Klappe 28 drücken. Dadurch wird eine kraftschlüssige Fixierung der Klappe 28 in bzw. an der Anzeigeschnittstelle 14 erzielt. In der Freigabestellung der Exzenter 64 sind diese soweit von der Klappe 28 beabstandet oder üben zumindest so wenig Kraft auf die Klappe 28 aus, dass diese problemlos aus dem Aufnahmebereich 24 herausgenommen bzw. auch in diesen eingeführt werden kann.

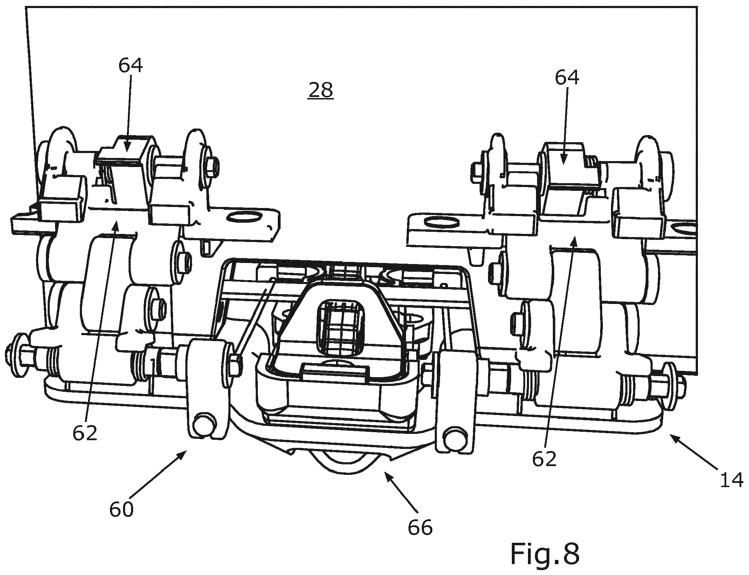

In Fig. 8 sind ein Teil der Anzeigeschnittstelle 14 und die Klappe 28 in einer Rückansicht gezeigt, wobei die Klappe 28 wiederum in ihrer Endstellung angeordnet ist. Hier sind nochmals gut die drehbar gelagerten Exzenter 64 zu erkennen, welche quer zur Einsteckrichtung der Klappe 28 gegen diese drücken und dadurch die Klappe 28 kraftschlüssig in ihrer Endstellung halten bzw. fixieren.

Die Fixiereinrichtung 60 umfasst neben dem kraftschlüssigen Fixiermechanismus 62 noch einen formschlüssigen Fixiermechanismus 66. Auf den Aufbau und die Bestandteile des formschlüssigen Fixiermechanismus 66 wird noch anhand der nachfolgenden Figuren näher eingegangen.

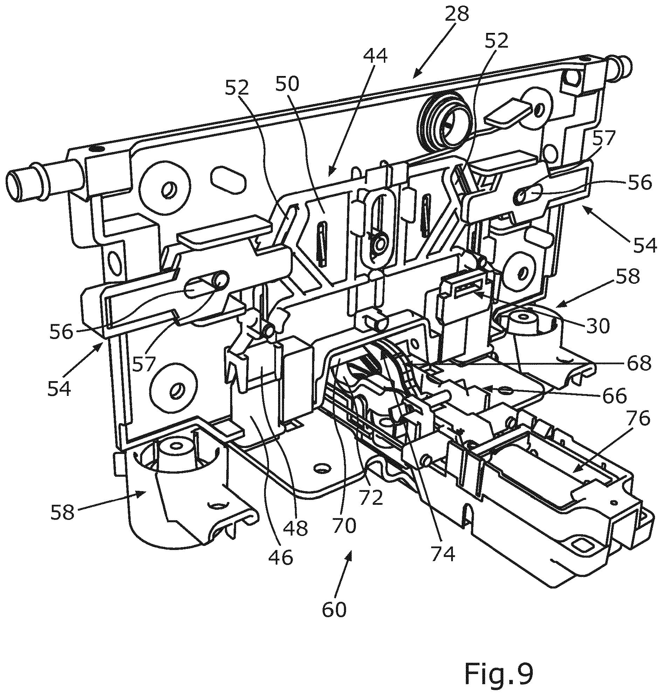

In Fig. 9 ist die in ihrer Endlage angeordnete Klappe 28 dargestellt, wobei wiederum eine Abdeckung bzw. ein Gehäuseteil weggelassen wurde, sodass das Innenleben der Klappe 28 zu erkennen ist. Vorliegend ist der Aufbau des formschlüssigen Fixiermechanismus 66 gut zu erkennen, welcher dazu ausgelegt ist, in einer hier gezeigten Fixierstellung die Klappe 28 formschlüssig in ihrer Endlage zu fixieren und in einer hier nicht dargestellten Freigabestellung eine Entnahme der Klappe 28 aus dem Aufnahmebereich (siehe Fig. 3) freizugeben. Der formschlüssige Fixiermechanismus 66 umfasst eine zwischen der Freigabestellung und der hier gezeigten Fixierstellung verschwenkbare Drehfalle 68 zum Aufnehmen eines an der Klappe 28 angeordneten Bolzens 70. Beim Bewegen der Klappe 28 in ihre hier gezeigte Endlage gleitet der Bolzen 70 entlang einer hier nicht erkennbaren Einführschräge der Drehfalle 68 zwischen zwei Schenkel 72, 74 der in der Freigabestellung angeordneten Drehfalle 68. In der hier gezeigten Fixierstellung verlaufen die Schenkel 72, 74 der Drehfalle 68 gemäß der vorliegenden Darstellung im Wesentlichen in horizontaler Richtung, wobei der Bolzen 70 in Hochrichtung, also in Einsteckrichtung der Klappe 28, zwischen den beiden Schenkeln 72, 74 angeordnet ist. Der obere der beiden Schenkel 72 verhindert dadurch, dass der Bolzen 70 entgegen der Einsteckrichtung nach oben bewegt werden kann, in Folge dessen auch die Klappe 28 nicht aus ihrer Endstellung wegbewegt werden kann.

Die Drehfalle 68 ist also verschwenkbar gelagert, wobei diese in ihrer Freigabestellung mit ihren beiden Schenkeln 72, 74 nach oben zeigt, die Schenkel 72, 74 also zumindest im Wesentlichen parallel zur Einsteckrichtung ausgerichtet sind. Dadurch kann der Bolzen 70 beim Einführen der Klappe 28 zwischen die Schenkel 72, 74 gelangen.

Die Drehfalle 68 ist nur in Richtung der Fixierstellung, welche hier gezeigt ist, frei verschwenkbar, wobei die Fixiereinrichtung 60 einen Mechanismus aufweist, welcher dazu ausgelegt ist, eine Verschwenkung der Drehfalle 68 in Richtung der Freigabestellung zu sperren und nur bei Vorliegen einer Freigabebedingung eine Verschwenkung in Richtung der Freigabestellung zu ermöglichen. Beispielsweise kann durch Drücken der Taste 16 (siehe Fig. 1 und 2) ein Freigabesignal erzeugt werden, welches der Freigabebedingung entspricht. Alternativ oder zusätzlich kann ein Nutzer beispielsweise auch die mobile Anzeigeeinrichtung 12 entsprechend bedienen, indem eine mechanische oder auch eine angezeigte virtuelle Taste betätigt wird, in Folge dessen ein Freigabesignal erzeugt wird, welches der Freigabebedingung entspricht.

Der besagte Mechanismus, welcher dazu ausgelegt ist, die Verschwenkung der Drehfalle 68 in Richtung der Freigabestellung zu sperren und bei vorliegender Freigabebedingung die Verschwenkung der Freigabestellung zu ermöglichen, umfasst einen Motor 76, der dazu ausgelegt ist, die Verschwenkung der Drehfalle 68 in Richtung der Freigabestellung zu sperren und bei vorliegender Freigabe die Drehfalle 68 aktiv in Richtung der Freigabestellung zu verschwenken. Der Motor 76 kann beispielsweise einen selbsthemmenden Antrieb aufweisen, der zumindest in der mit der Drehung der Drehfalle 68 in ihrer Freigabestellung korrespondiert selbsthemmend ist.

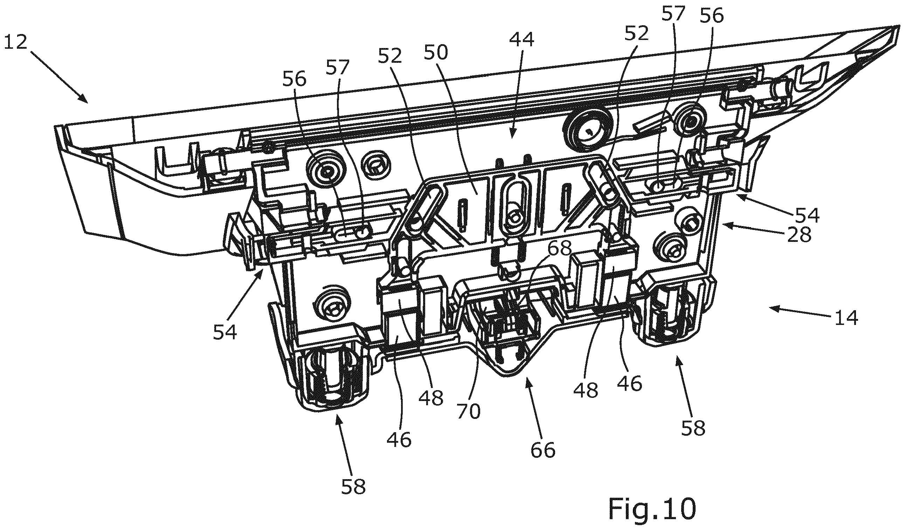

In Fig. 10 ist das Anzeigesystem 10 in einer perspektivischen Rückansicht gezeigt, wobei die Klappe 28 wiederum in ihrer Endlage innerhalb des hier nicht näher bezeichneten Aufnahmebereichs 24 der Anzeigeschnittstelle 14 angeordnet ist. Vorliegend kann man unter anderem noch einmal die Drehfalle 68 erkennen, welche in ihrer Fixierstellung angeordnet ist, in welcher der Bolzen 70, der in der Klappe 28 angeordnet ist, formschlüssig fixiert gehalten wird. Der die Drehfalle 68 umfassende formschlüssige Fixiermechanismus 66 und der die beiden hier nicht erkennbaren Exzenter 64 (siehe beispielsweise Fig. 7) umfassende kraftschlüssige Fixiermechanismus 62 sind bezüglich ihrer jeweiligen Bewegungen von ihrer Freigabestellung in ihre Fixierstellung miteinander gekoppelt. Wird also die Drehfalle 68 durch entsprechende Einführbewegung bzw. Einsteckbewegung der Klappe 28 von ihrer nach oben gerichteten Freigabestellung in ihre nach unten geschwenkte Fixierstellung verdreht, bewirkt dies automatisch, dass die beiden Exzenter 64 (siehe unter anderem Fig. 7) ebenfalls entsprechend verschwenkt werden, sodass spätestens wenn die Klappe 28 in ihrer Endstellung angelangt ist, sowohl die Exzenter 64 als auch die Drehfalle 68 dafür sorgen, dass die Klappe 28 in der beschriebenen Weise in ihrer Endstellung fixiert gehalten wird.

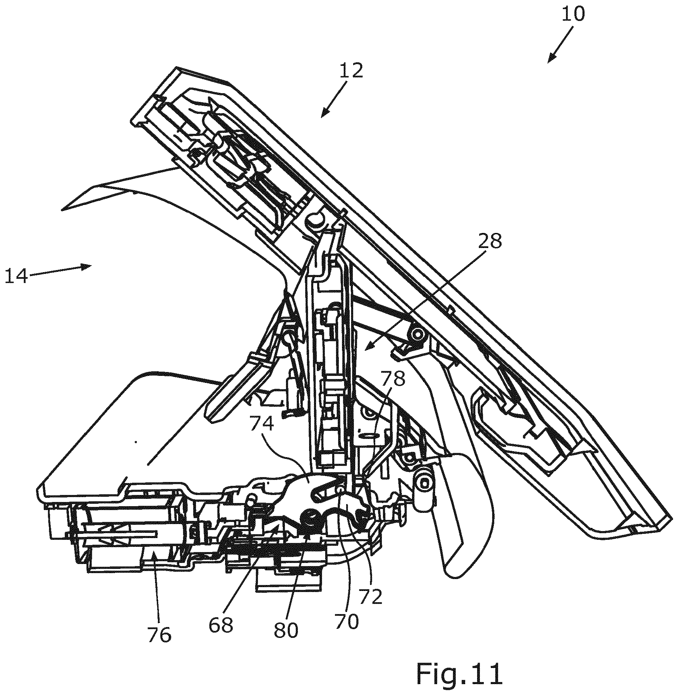

Schließlich ist in Fig. 11 das Anzeigesystem 10 in einer teilweise geschnittenen Seitenansicht gezeigt. Hier ist erstmalig die zuvor in Zusammenhang mit Fig. 9 bereits erwähnte Einführschräge 78 an der Drehfalle 68 zu erkennen. Die Drehfalle 68 ist wiederum in ihrer Fixierstellung gezeigt, in welcher der Bolzen 70 so zwischen den beiden Schenkeln 72, 74 der Drehfalle 68 angeordnet ist, dass dieser nicht nach oben bewegt werden kann, in Folge dessen die Klappe 28 auch nicht aus dem Aufnahmebereich 24 der Anzeigeschnittstelle 14 herausbewegt werden kann.

Stellt man sich nun vor, dass die Drehfalle 68 entsprechend der vorliegenden Darstellung um 90° gegen den Uhrzeigersinn verschwenkt wurde, so erhält man eine gute Vorstellung, wie die Freigabestellung der Drehfalle 68 aussieht. Die Einführschräge 78 ist dabei - gemäß der vorliegenden Darstellung - etwas rechts von einer Drehachse 80 der Drehfalle 68 angeordnet. Wird nun die Klappe 28 von oben in den hier nicht näher bezeichneten Aufnahmebereich 24 der Anzeigeschnittstelle 14 eingeführt, so gelangt der Bolzen 70 zuerst in Kontakt mit der Einführschräge 78. Bei weiterer Bewegung der Klappe 28 nach unten drückt der Bolzen 70 auf die Einführschräge 78 und gleitet dabei entlang der Einführschräge 78 zwischen die beiden Schenkel 72, 74, wobei dadurch die Drehfalle 68 weiter - gemäß der vorliegenden Darstellung - im Uhrzeigersinn verschwenkt wird, bis letztlich in der Endstellung der Klappe 28 die hier gezeigte Fixierstellung der Drehfalle 68 erreicht ist.

Anstelle des an der Klappe 28 angeordneten Bolzens 70 kann die Klappe 28 z.B. auch eine geometrisch so geformte und dimensionierte Öffnung aufweisen, die ein Eingreifen bzw. Durchgreifen der Drehfalle 68 erlaubt. Die Öffnung und/oder die Drehfalle 68 können z.B. so geformt sein, dass die Drehfalle 68 sich beim Absenken der Klappe 28 automatisch in diese Öffnung einfädelt. Dadurch wird- im Prinzip wie bei der Verwendung des Bolzens 70 - bei weiterem Absenken der Klappe 28 die Drehfalle 68 so weit verdreht, dass die Drehfalle 68 in der Endstellung der Klappe 28 wiederum so ausgerichtet ist, dass die Klappe 28 aufgrund des Eingreifens der Drehfalle 68 nicht mehr aus dem Aufnahmebereich 24 herausbewegt werden kann.

Das Anzeigesystem 10 bietet die Möglichkeit, die Anzeigeeinrichtung 12 sowohl in einem am betreffenden Fahrzeug fixierten Zustand also auch in einem vom Fahrzeug gelösten Zustand zu verwenden. Die Klappe 28 an der Anzeigeeinrichtung 12 und die Fixiereinrichtung 60 der Anzeigeschnittstelle 14 sorgen dafür, dass die Klappe 28 und somit die Anzeigeeinrichtung 12 sicher am Fahrzeug, beispielsweise an einer Instrumententafel, fixiert gehalten werden kann. Bei Bedarf kann die Fixiereinrichtung 60 gelöst und die mobile Anzeigeeinrichtung 12 vom Fahrzeug gelöst werden.

### BEZUGSZEICHENLISTE

- 10: Anzeigesystem
- 12: mobile Anzeigeeinrichtung
- 14: Anzeigeschnittstelle
- 16: Taste der Anzeigeschnittstelle
- 18: Blende der Anzeigeschnittstelle
- 20: Abdeckung
- 22: Einstecköffnung
- 24: Aufnahmebereich
- 26: Randbereich der Blende
- 28: Klappe
- 30: Schnittstelle an der Klappe
- 32: Verriegelung
- 34: Rahmen
- 36: Langloch
- 38: Stift
- 40: Taste
- 42: Feder
- 44: Neigungssperre
- 46: Kontur
- 48: zur Kontur komplementäre Struktur
- 50: Platte
- 52: schräg verlaufende Langlöcher
- 54: Sperrriegel
- 56: Langloch
- 57: Stift
- 58: Federtonne
- 60: Fixiereinrichtung
- 62: kraftschlüssiger Fixiermechanismus
- 64: Exzenter
- 66: formschlüssiger Fixiermechanismus
- 68: Drehfalle
- 70: Bolzen
- 72: Schenkel der Drehfalle
- 74: Schenkel der Drehfalle
- 76: Motor
- 78: Einführschräge der Drehfalle
- 80: Drehachse der Drehfalle

## Patentansprüche

1. Anzeigesystem (10) für ein Fahrzeug, umfassend
- eine mobile Anzeigeeinrichtung (12) mit einer aus einer eingeklappten Stellung ausklappbaren Klappe (28) zum Fixieren der Anzeigeeinrichtung (12) in einem Fahrzeuginnenraum des Fahrzeugs;
- eine im Fahrzeuginnenraum integrierbare Anzeigeschnittstelle (14) zum Aufnehmen und Fixeren der mobilen Anzeigeeinrichtung (12) in einer definierten Gebrauchsstellung, wobei die Anzeigeschnittstelle (14) einen als Vertiefung ausgebildeten Aufnahmebereich (24) umfasst, in welchen die ausgeklappte Klappe (28) in einer Einsteckrichtung einführbar und mittels einer im Aufnahmebereich (24) angeordneten Fixiereinrichtung (60) in einer Endlage fixierbar ist, in welcher die mobile Anzeigeeinrichtung (12) in der Gebrauchsstellung angeordnet ist, **dadurch gekennzeichnet, dass**
- die Fixiereinrichtung (60) einen kraftschlüssigen Fixiermechanismus (62) aufweist, welcher dazu ausgelegt ist, in einer Fixierstellung die Klappe (28) kraftschlüssig in der Endlage zu fixieren und in einer Freigabestellung eine Entnahme der Klappe (28) aus dem Aufnahmebereich (24) freizugeben, und der kraftschlüssige Fixiermechanismus (62) einen drehbar gelagerten Exzenter (64) aufweist, welcher in der Fixierstellung an der in der Endstellung angeordneten Klappe (28) anliegt und in der Freigabestellung von der Klappe (28) beabstandet ist.

2. Anzeigesystem (10) nach Anspruch 1,
**dadurch gekennzeichnet, dass**
die Fixiereinrichtung (60) einen formschlüssigen Fixiermechanismus (66) aufweist, welcher dazu ausgelegt ist, in einer Fixierstellung die Klappe (28) formschlüssig in der Endlage zu fixieren und in einer Freigabestellung eine Entnahme der Klappe (28) aus dem Aufnahmebereich (24) freizugeben.

3. Anzeigesystem (10) nach Anspruch 2,
**dadurch gekennzeichnet, dass**
der formschlüssige Fixiermechanismus (66) eine zwischen der Freigabestellung und der Fixierstellung verschwenkbare Drehfalle (68) zum Aufnehmen eines an der Klappe (28) angeordneten Bolzens (70) aufweist, wobei beim Bewegen der Klappe (28) in die Endlage der Bolzen (70) entlang einer Einführschräge (78) der Drehfalle (68) zwischen zwei Schenkel (72, 74) der in der Freigabestellung angeordneten Drehfalle (68) gleitet und diese in die Fixierstellung verschwenkt, in welcher die Schenkel (72, 74) der Drehfalle (68) eine Bewegung des Bolzens (70) aus der Endstellung der Klappe (28) heraus entgegengesetzt zur Einsteckrichtung sperren.

4. Anzeigesystem (10) nach Anspruch 3,
**dadurch gekennzeichnet, dass**
die Drehfalle (68) nur in Richtung der Fixierstellung frei verschwenkbar ist, wobei die Fixiereinrichtung (60) einen Mechanismus aufweist, welcher dazu ausgelegt ist, eine Verschwenkung der Drehfalle (68) in Richtung der Freigabestellung zu sperren und nur bei Vorliegen einer Freigabebedingung eine Verschwenkung in Richtung der Freigabestellung zu ermöglichen.

5. Anzeigesystem (10) nach Anspruch 4,
**dadurch gekennzeichnet, dass**
der Mechanismus einen Motor (76) aufweist, welcher dazu ausgelegt ist, die Verschwenkung der Drehfalle (68) in Richtung der Freigabestellung zu sperren und bei Vorliegen der Freigabebedingung die Drehfalle (68) aktiv in Richtung der Freigabestellung zu verschwenken.

6. Anzeigesystem (10) nach einem der vorhergehenden Ansprüche,
**dadurch gekennzeichnet, dass**
die Klappe (28) eine Neigungssperre (44) aufweist, welche beim Bewegen der Klappe (28) in die Endstellung mittels einer Kontur (46) der Anzeigeschnittstelle (14) in eine Sperrstellung bewegt wird, in welcher die Neigungssperre (44) die Klappe (28) in einer vorgegebenen Winkelposition zur restlichen Anzeigeeinrichtung (12) fixiert.

7. Anzeigesystem (10) nach einem der Ansprüche 1 bis 5,
**dadurch gekennzeichnet, dass**
die Klappe (28) mittels wenigstens eines Gelenks verschwenkbar an der restlichen Anzeigeeinrichtung (12) gelagert ist, welches zumindest so schwergängig ist, dass zumindest allein schwerkraftbedingt keine Winkeländerung zwischen der Klappe (28) und der restlichen Anzeigeeinrichtung (12) auftritt.

8. Anzeigesystem (10) nach Anspruch 1,
**dadurch gekennzeichnet, dass**
der kraftschlüssige Fixiermechanismus (62) in der Fixierstellung die in der Endstellung angeordnete Klappe (28) quer zur Einsteckrichtung an eine Anlagefläche des Aufnahmebereichs (24) drückt.

9. Anzeigesystem (10) nach einem der vorhergehenden Ansprüche,
**dadurch gekennzeichnet, dass**
der kraftschlüssige Fixiermechanismus (62) und der formschlüssige Fixiermechanismus (66) bezüglich ihrer Bewegung von der jeweiligen Freigabestellung in die jeweilige Fixierstellung miteinander gekoppelt sind.

10. Anzeigesystem (10) nach einem der vorhergehenden Ansprüche,
**dadurch gekennzeichnet, dass**
die Anzeigeschnittstelle (14) einen Federmechanismus (58) aufweist, welcher in der Endlage der Klappe (28) eine Kraft auf diese entgegengesetzt zur Einsteckrichtung ausübt, sodass sobald die Fixiereinrichtung (60) die Klappe (28) nicht mehr fixiert, die Klappe (28) mittels des Federmechanismus (58) entgegengesetzt zur Einsteckrichtung ein Stück aus dem Aufnahmebereich (24) befördert wird.

11. Anzeigesystem (10) nach einem der vorhergehenden Ansprüche,
**dadurch gekennzeichnet, dass**
die Anzeigeschnittstelle (14) eine oberhalb vom Aufnahmebereich (24) angeordnete Blende (18) mit eine Einstecköffnung (22) zum Einstecken der Klappe (28) in den Aufnahmebereich (24) aufweist, wobei ein sich zumindest über die Breite der Einstecköffnung (22) erstreckender und an diese angrenzender Randbereich (26) der Blende (18) schräg bis zur Einstecköffnung (22) abfällt.

12. Mobile Anzeigeeinrichtung (12) für ein Anzeigesystem (10) nach einem der vorhergehenden Ansprüche, umfassend eine aus einer eingeklappten Stellung ausklappbare Klappe (28) zum Fixieren der Anzeigeeinrichtung (12) in einem Fahrzeuginnenraum des Fahrzeugs, wobei die Anzeigeeinrichtung (12) dazu ausgelegt ist, mit der Anzeigeschnittstelle (14) zusammenzuwirken.

13. Anzeigeschnittstelle (14) für ein Anzeigesystem (10) nach einem der Ansprüche 1 bis 12, welche in einem Fahrzeuginnenraum integrierbar und zum Aufnehmen sowie Fixeren der mobilen Anzeigeeinrichtung (12) des Anzeigesystems (10) in einer definierten Gebrauchsstellung ausgelegt ist, wobei die Anzeigeschnittstelle (14) einen als Vertiefung ausgebildeten Aufnahmebereich (24) umfasst, in welchen die ausgeklappte Klappe (28) in einer Einsteckrichtung einführbar und mittels einer im Aufnahmebereich (24) angeordneten Fixiereinrichtung (60) in einer Endlage fixierbar ist, in welcher die mobile Anzeigeeinrichtung (12) in der Gebrauchsstellung angeordnet ist.

## Claims

1. Display system (10) for a vehicle, comprising
- a mobile display device (12) having a flap (28) that can be folded out from a folded-in position for fixing the display device (12) in an interior of the vehicle;
- a display interface (14) that can be integrated in the vehicle interior for receiving and fixing the mobile display device (12) in a defined position of use, wherein the display interface (14) comprises a receiving area (24) designed as a recess, into which the folded-out flap (28) can be inserted in an insertion direction and, by means of a fixing device (60) arranged in the receiving area (24), can be fixed in an end position, in which the mobile display device (12) is arranged in the position of use, **characterized in that**
- the fixing device (60) has a force-fitting fixing mechanism (62) which is designed to fix the flap (28) in the end position in a force-fitting manner in a fixing position and to enable the flap (28) to be removed from the receiving area (24) in a release position, and the force-fitting fixing mechanism (62) has a rotatably mounted eccentric (64) which, in the fixing position, bears on the flap (28) arranged in the end position and, in the release position, is spaced apart from the flap (28).

2. Display system (10) according to Claim 1,
**characterized in that**
the fixing device (60) has a form-fitting fixing mechanism (66) which is designed to fix the flap (28) in the end position in a form-fitting manner in a fixing position and to enable the flap (28) to be removed from the receiving area (24) in a release position.

3. Display system (10) according to Claim 2,
**characterized in that**
the form-fitting fixing mechanism (66) has a rotary catch (68) that can be pivoted between the release position and the fixing position to receive a pin (70) arranged on the flap (28), wherein, as the flap (28) is moved into the end position, the pin (70) slides along an insertion bevel (78) of the rotary catch (68) between two legs (72, 74) of the rotary catch (68) arranged in the release position and pivots the latter into the fixing position, in which the legs (72, 74) of the rotary catch (68) block a movement of the pin (70) out of the end position of the flap (28) counter to the insertion direction.

4. Display system (10) according to Claim 3,
**characterized in that**
the rotary catch (68) is freely pivotable only in the direction of the fixing position, wherein the fixing device (60) has a mechanism which is designed to block pivoting of the rotary catch (68) in the direction of the release position and to permit pivoting in the direction of the release position only when a release condition is present.

5. Display system (10) according to Claim 4,
**characterized in that**
the mechanism has a motor (76) which is designed to block the pivoting of the rotary catch (68) in the direction of the release position and to pivot the rotary catch (68) actively in the direction of the release position when the release condition is present.

6. Display system (10) according to one of the preceding claims,
**characterized in that**
the flap (28) has a tilt lock (44) which, as the flap (28) is moved into the end position, is moved by means of a contour (46) of the display interface (14) into a locked position, in which the tilt lock (44) fixes the flap (28) in a predefined angular position relative to the remainder of the display device (12).

7. Display system (10) according to one of Claims 1 to 5,
**characterized in that**
the flap (28) is pivotably mounted on the remainder of the display device (12) by means of at least one joint, which is at least so stiff that no change in the angle between the flap (28) and the remainder of the display device (12) occurs at least solely as a result of the force of gravity.

8. Display system (10) according to Claim 1,
**characterized in that**
in the fixing position, the force-fitting fixing mechanism (62) presses the flap (28) arranged in the end position onto a contact surface of the receiving area (24), transversely relative to the insertion direction.

9. Display system (10) according to one of the preceding claims,
**characterized in that**
the force-fitting fixing mechanism (62) and the form-fitting fixing mechanism (66) are coupled to each other with respect to their movement from the respective release position into the respective fixing position.

10. Display system (10) according to one of the preceding claims,
**characterized in that**
the display interface (14) has a spring mechanism (58) which, in the end position of the flap (28), exerts a force on the latter counter to the insertion direction so that, as soon as the fixing device (60) no longer fixes the flap (28), the flap (28) is moved slightly out of the receiving area (24) by means of the spring mechanism (58), counter to the insertion direction.

11. Display system (10) according to one of the preceding claims,
**characterized in that**
the display interface (14) has a panel (18) arranged above the receiving area (24) and having an insertion opening (22) for the insertion of the flap (28) into the receiving area (24), wherein an edge region (26) of the panel (18) extending at least over the width of the insertion opening (22) and adjacent to the latter slopes obliquely down as far as the insertion opening (22).

12. Mobile display device (12) for a display system (10) according to one of the preceding claims, comprising a flap (28) that can be folded out from a folded-in position for fixing the display device (12) in an interior of the vehicle, wherein the display device (12) is designed to interact with the display interface (14).

13. Display interface (14) for a display system (10) according to one of Claims 1 to 12, which can be integrated in a vehicle interior and is designed to receive and fix the mobile display device (12) of the display system (10) in a defined position of use, wherein the display interface (14) comprises a receiving area (24) designed as a recess, into which the folded-out flap (28) can be inserted in an insertion direction and, by means of a fixing device (60) arranged in the receiving area (24), can be fixed in an end position, in which the mobile display device (12) is arranged in the position of use.

## Revendications

1. Système d'affichage (10) pour un véhicule, comprenant
- un dispositif d'affichage mobile (12) doté d'un volet (28) pouvant être déployé à partir d'une position repliée pour la fixation du dispositif d'affichage (12) dans un espace intérieur du véhicule ;
- une interface d'affichage (14) pouvant être intégrée dans l'espace intérieur de véhicule pour la réception et la fixation du dispositif d'affichage mobile (12) dans une position d'utilisation définie, l'interface d'affichage (14) comprenant une région de réception (24) réalisée sous forme d'évidement, dans laquelle le volet déployé (28) peut être introduit dans un sens d'insertion et peut être fixé dans une position finale au moyen d'un dispositif de fixation (60) disposé dans la région de réception (24), position finale dans laquelle le dispositif d'affichage mobile (12) est disposé dans la position d'utilisation, **caractérisé en ce que**
- le dispositif de fixation (60) présente un mécanisme de fixation (62) à engagement par force, lequel est conçu pour, dans une position de fixation, fixer le volet (28) par engagement par force dans la position finale et, dans une position de libération, libérer un retrait du volet (28) hors de la région de réception (24), et le mécanisme de fixation (62) à engagement par force présente un excentrique (64) monté à rotation, lequel, dans la position de fixation, s'appuie contre le volet (28) disposé dans la position finale et, dans la position de libération, est espacé du volet (28).

2. Système d'affichage (10) selon la revendication 1,
**caractérisé en ce que**
le dispositif de fixation (60) présente un mécanisme de fixation (66) à engagement par complémentarité de formes, lequel est conçu pour, dans une position de fixation, fixer le volet (28) par engagement par complémentarité de formes dans la position finale et, dans une position de libération, libérer un retrait du volet (28) hors de la région de réception (24).

3. Système d'affichage (10) selon la revendication 2,
**caractérisé en ce que**
le mécanisme de fixation (66) à engagement par complémentarité de formes présente un pêne rotatif (68) pouvant pivoter entre la position de libération et la position de fixation pour la réception d'une cheville (70) disposée sur le volet (28), la cheville (70), lors du déplacement du volet (28) dans la position finale, glissant le long d'un biseau d'introduction (78) du pêne rotatif (68) entre deux branches (72, 74) du pêne rotatif (68) disposé dans la position de libération et faisant pivoter celui-ci dans la position de fixation, dans laquelle les branches (72, 74) du pêne rotatif (68) bloquent un déplacement de la cheville (70) hors de la position finale du volet (28) en sens inverse du sens d'insertion.

4. Système d'affichage (10) selon la revendication 3,
**caractérisé en ce que**
le pêne rotatif (68) ne peut être pivoté librement qu'en direction de la position de fixation, le dispositif de fixation (60) présentant un mécanisme, lequel est conçu pour bloquer un pivotement du pêne rotatif (68) en direction de la position de libération et pour ne permettre un pivotement en direction de la position de libération qu'en présence d'une condition de libération.

5. Système d'affichage (10) selon la revendication 4,
**caractérisé en ce que**
le mécanisme présente un moteur (76), lequel est conçu pour bloquer le pivotement du pêne rotatif (68) en direction de la position de libération et pour faire pivoter le pêne rotatif (68) activement en direction de la position de libération en présence de la condition de libération.

6. Système d'affichage (10) selon l'une des revendications précédentes,
**caractérisé en ce que**
le volet (28) présente un blocage d'inclinaison (44), lequel, lors du déplacement du volet (28) dans la position finale, est déplacé dans une position de blocage au moyen d'un contour (46) de l'interface d'affichage (14), position de blocage dans laquelle le blocage d'inclinaison (44) fixe le volet (28) dans une position angulaire prédéfinie par rapport au dispositif d'affichage (12) restant.

7. Système d'affichage (10) selon l'une des revendications 1 à 5,
**caractérisé en ce que**
le volet (28) est monté sur le dispositif d'affichage (12) restant de manière pivotante au moyen d'une articulation, laquelle est au moins grippée de telle sorte qu'aucun changement angulaire entre le volet (28) et le dispositif d'affichage (12) restant ne se produise au moins seulement sous l'effet de la gravité.

8. Système d'affichage (10) selon la revendication 1,
**caractérisé en ce que**
le mécanisme de fixation (62) à engagement par force, dans la position de fixation, presse le volet (28) disposé dans la position finale contre une surface d'appui de la région de réception (24) transversalement au sens d'insertion.

9. Système d'affichage (10) selon l'une des revendications précédentes,
**caractérisé en ce que**
le mécanisme de fixation (62) à engagement par force et le mécanisme de fixation (66) à engagement par complémentarité de formes sont accouplés l'un à l'autre en ce qui concerne leur déplacement de la position de libération respective à la position de fixation respective.

10. Système d'affichage (10) selon l'une des revendications précédentes,
**caractérisé en ce que**
l'interface d'affichage (14) présente un mécanisme à ressort (58), lequel, dans la position finale du volet (28), exerce une force sur celui-ci en sens inverse du sens d'insertion, de sorte que, dès que le dispositif de fixation (60) ne fixe plus le volet (28), le volet (28) est transporté au moyen du mécanisme à ressort (58) en sens inverse du sens d'insertion un peu hors de la région de réception (24).

11. Système d'affichage (10) selon l'une des revendications précédentes,
**caractérisé en ce que**
l'interface d'affichage (14) présente un panneau (18) disposé au-dessus de la région de réception (24) et doté d'une ouverture d'insertion (22) pour l'insertion du volet (28) dans la région de réception (24), une région de bord (26) du panneau (18), laquelle s'étend au moins sur la largeur de l'ouverture d'insertion (22) et est adjacente à celle-ci, descendant en pente jusqu'à l'ouverture d'insertion (22).

12. Dispositif d'affichage mobile (12) pour un système d'affichage (10) selon l'une des revendications précédentes, comprenant un volet (28) pouvant être déployé à partir d'une position repliée pour la fixation du dispositif d'affichage (12) dans un espace intérieur du véhicule, le dispositif d'affichage (12) étant conçu pour coopérer avec l'interface d'affichage (14).

13. Interface d'affichage (14) pour un système d'affichage (10) selon l'une des revendications 1 à 12, laquelle peut être intégrée dans un espace intérieur de véhicule et est conçue pour la réception ainsi que la fixation du dispositif d'affichage mobile (12) du système d'affichage (10) dans une position d'utilisation définie, l'interface d'affichage (14) comprenant une région de réception (24) réalisée sous forme d'évidement, dans laquelle le volet déployé (28) peut être introduit dans un sens d'insertion et peut être fixé dans une position finale au moyen d'un dispositif de fixation (60) disposé dans la région de réception (24), position finale dans laquelle le dispositif d'affichage mobile (12) est disposé dans la position d'utilisation.
